# FASCICULE DE BREVET EUROPEEN

(11) **EP 1 943 809 B1**
(45) Date de publication et mention de la délivrance du brevet: **18.08.2010**
(21) Numéro de dépôt: 06820254.8
(22) Date de dépôt: 04.10.2006
(51) Int. Cl.: H04L 29/06, H04L 12/28

(54) **PROCEDE DE GESTION AUTOMATIQUE DES ASSOCIATIONS ENTRE SERVICES DANS UN ENVIRONNEMENT DISTRIBUE**
VERFAHREN ZUM AUTOMATISCHEN VERWALTEN VON ASSOZIATIONEN ZWISCHEN DIENSTEN IN EINER VERTEILTEN UMGEBUNG
METHOD FOR AUTOMATICALLY MANAGING ASSOCIATIONS BETWEEN SERVICES IN A DISTRIBUTED ENVIRONMENT

(30) Priorité: 11.10.2005 FR 0553085
(43) Date de publication de la demande: 16.07.2008
(73) Titulaire: FRANCE TELECOM, 75015 Paris (FR)
(72) Inventeur: BOTTARO, André, F-38000 Grenoble (FR); GERODOLLE, Anne, F-38320 Eybens (FR); OLIVE, Vincent, F-38190 Bernin (FR)
(86) Numéro de dépôt international: PCT/FR2006/050991
(87) Numéro de publication internationale: WO 2007/042713

(56) Documents cités:
- WO-A-01/86419
- US-A1- 2005 097 087
- US-A1- 2005 220 139
- PAUL GRACE, GORDON S. BLAIR AND SAM SAMUEL: "A Reflective Framework for Discovery and Interaction in Heterogeneous Mobile Environments" ACM SIGMOBILE MOBILE COMPUTING AND COMMUNICATIONS REVIEW, [Online] vol. 9(1), 31 janvier 2005 (2005-01-31), pages 2-14, XP002390890 Extrait de l'Internet: URL:http://www.lancs.ac.uk/postgrad/gracep /rmjournal.pdf> [extrait le 2006-07-18]

## Description

La présente invention concerne un procédé de gestion automatique des associations entre composants demandeurs de services et composants fournisseurs de services dans un environnement distribué.

L'invention trouve une application particulièrement avantageuse dans le domaine des réseaux domestiques et des petits réseaux d'entreprises, ou encore du réseau interne à une voiture, un bateau ou un satellite.

Il est en effet aujourd'hui possible d'installer à domicile un réseau domestique et des équipements électroniques qui se connectent à ce réseau. Ces équipements vont de l'ordinateur classique jusqu'aux équipements électroménagers (réfrigérateur, lave-vaisselle, et ainsi de suite) en passant par les assistants personnels (PDA), les téléphones intelligents (« smart phones »), les équipements audio-visuels (télévision, magnétoscope, lecteur de DVD, et ainsi de suite). Sur un petit réseau d'entreprise, ces équipements sont par exemple une imprimante, un scanneur, un télécopieur, des serveurs d'applications (messagerie, outils d'entreprise), une visionneuse de présentation. Quel que soit le type de réseau, on peut également installer des capteurs ou des actionneurs connectés à ce réseau.

Par conséquent, l'invention proposée est destinée à être déployée sur des équipements électroniques intelligents à la maison, en entreprise, ou en des lieux où des réseaux locaux sont utilisés. Dans tous les cas, il existe des technologies permettant aux équipements requérant des services de découvrir les équipements fournisseurs de ces services et de s'interconnecter. Grâce à l'invention, il est possible de développer des applications indépendamment de la connaissance de la technologie de découverte et d'interconnexion choisie par les équipements.

Le procédé proposé par l'invention repose sur la notion d'Architecture Orientée Service, laquelle est issue de la Programmation Orientée Objet et de la Programmation par Composants.

En substance, l'Architecture Orientée Service résulte de l'idée qu'une application peut être considérée comme la composition de services. Les services sont des "contrats" qui doivent être respectés par des fournisseurs de services. Ceux-ci publient leur identité en déclarant les services qu'ils sont en mesure d'offrir soit auprès d'un répertoire de services, soit directement auprès d'une liste de clients ou demandeurs de services découverts dynamiquement, soit par diffusion sur un canal en multidiffusion. Les demandeurs de services formulent des requêtes soit auprès du répertoire de services, soit directement auprès des fournisseurs de services découverts dynamiquement, par exemple par requête en multidiffusion, afin de connaître et choisir le fournisseur de services adéquat. Pour le service, le demandeur se relie au fournisseur requis et peut lui demander d'effectuer des actions proposées dans le "contrant".

Ces architectures sont habituellement développées dans le paradigme d' « Objet ». Les services sont des interfaces. Les fournisseurs de services sont des objets issus de classes implémentant ces interfaces. Chaque demandeur de services peut se relier à un fournisseur de services découvert selon l'une de méthodes citées ci-dessus. Il peut alors appeler les méthodes déclarées par l'interface auprès de l'objet fournisseur.

Les objets fournisseurs et les objets demandeurs peuvent faire partie d'entités plus importantes ou être eux-mêmes composés d'autres objets plus élémentaires. Dans ce mémoire, les objets demandeurs de services ou fournisseurs de services sont tous deux appelés "composants". On notera qu'un composant peut, le cas échéant, être à la fois demandeur d'un service et fournisseur d'un (autre) service.

L'avantage des architectures orientées service est qu'elles permettent un couplage lâche entre les entités qui la composent. Elles n'interagissent que par connaissance de services définis de façon générique. L'implémentation de ces services peut être effectuée, et donc fournie, de plusieurs façons. Une entité peut être aisément remplacée par une autre dans ce type d'architecture à la seule condition qu'elle fournisse les mêmes services.

Une architecture orientée service peut être distribuée ou non. Si elle est distribuée, les entités peuvent être réparties sur des équipements différents. La liaison entre les entités utilise alors un protocole de communication distante.

On connaît dans l'état de la technique sous le nom de « Service Binder » un système pour automatiser la gestion des dépendances de services sur une plate-forme Java non distribuée de services, appelée OSGi. Ce système permet d'adapter dynamiquement une application à partir d'informations fournies par les composants qui la constituent. Les applications ainsi construites sont capables de s'assembler et de s'adapter de façon dynamique.

Conçu au dessus d'un modèle à composants OSGi, le Service Binder automatise la découverte de services et la liaison entre composants déployés sur la plate-forme OSGi. A chaque composant est associé un fichier descriptif des services fournis et requis qui est analysé par le Service Binder. Cette analyse permet l'adaptation automatique de chaque composant à l'évolution de la composition de la plate-forme : départ ou installation de nouveaux composants, enregistrement ou suppression de services.

Il est important de noter que ce système est adapté à la construction d'applications non distribuées. Cela résulte du fait que la plate-forme de services OSGi est elle-même non distribuée.

Par ailleurs, on connaît également des technologies pouvant être utilisées dans un environnement informatique distribué.

On connaît ainsi, par exemple, la technologie proposée dans la demande WO 01/86419 au nom de Sun Microsystems. Selon le procédé de découverte de services décrit dans cette demande, un "client" émet une requête incluant des critères de recherche, puis on compare ces critères de recherche à des offres de services dans l'environnement distribué, et puis le client reçoit des messages indiquant les offres de services obéissant à ses critères de recherche. Les requêtes de services et les offres de services sont exprimées dans un langage de représentation de données adéquat, par exemple le langage XML ("*eXtensible Markup Language*"). On notera que, pour pouvoir mettre en oeuvre la découverte de services distants et leur utilisation conformément à la demande WO 01/86419, il est nécessaire qu'un développeur associé au "client" écrive et envoie une série de messages (qui font appel aux méthodes d'une interface dédiée désignée par "API layer 102"). Cette technologie fait donc obligatoirement appel à une intervention humaine en cours d'exécution.

L'article de P. Grace, G.S. Blair et S. Samuel "A Reflective Framework for Discovery and Interaction in Heterogeneous Mobile Environments" (ACM Sigmobile Mobile Computing and Communications Review, vol. 9(1), pages 2 à 14, janvier 2005) aborde le problème de l'interopérabilité entre les protocoles existants, et propose une plate-forme du nom de "ReMMoC" (initiales des mots anglais "*Reflective Middleware to Support Mobile Client Operability*")

Si la technologie ReMMoC résout le problème de compatibilité entre différentes technologies de découverte de service et entre différentes technologies de communication distante, elle n'adresse pas le problème de l'automatisation de la gestion des dépendances de services, et la mise en oeuvre de ReMMoC pour toute recherche de services requiert l'intervention d'un développeur.

De plus, ReMMoC ne présente pas la possibilité de n'utiliser que des appels de méthodes locaux lorsque les services sont fournis par une même machine, alors que les appels de méthodes locaux dans un langage de programmation sont plus rapides que les appels de méthodes distants.

On connaît également la technologie UPnP ("*Universal Plug and* Play")/SSDP, qui repose sur une architecture distribuée de services dynamiques pour des périphériques réseau (télévision, éclairage, routeur ADSL, lecteur de DVD, volets déroulants, et ainsi de suite) et des points de contrôle (PDA, télévision, interrupteur mural, et ainsi de suite) connectés entre eux par un réseau *ad hoc.* La technologie UPnP/SSDP définit ses protocoles de découverte de service. Les protocoles de communication distante sont empruntés à SOAP *("Simple Object Access Protocof').* Là encore, aucun mécanisme n'est prévu pour automatiser la découverte de services requis.

On connaît aussi les Web Services, dont l'architecture est apparue pour permettre à des applications hétérogènes s'exécutant au sein de différentes entreprises de pouvoir inter-opérer via des services offerts par les applications. L'hétérogénéité des applications n'est pas seulement considérée au niveau des langages d'implémentation des applications, mais aussi au niveau des modèles d'interaction définis par les protocoles de communication.

La description des services Web est réalisée dans un langage appelé WSDL ("*Web Service Description Language*"). Ce langage, qui repose sur une grammaire XML, permet de décrire l'interface du service, les types de données employés dans les messages, le protocole de transport employé dans la communication et des informations permettant de localiser le service spécifié. Le répertoire de services appelé UDDI ("*Universal Description Discovery and intégration*") admet l'enregistrement de descriptions de services (appelés types de services) et de fournisseurs de services des entreprises. Le protocole de communication par défaut est SOAP.

En résumé, de nombreuses technologies permettent aujourd'hui à des équipements électroniques de s'interconnecter sur un réseau et de se déconnecter du réseau sans en perturber le fonctionnement global: les protocoles de découverte de services distribués comme Jini (proposé par la société Sun Microsystems), UPnP, Web Services, et ainsi de suite, permettent aux équipements d'annoncer leurs services et de découvrir les services fournis sur.le réseau, notamment ceux dont ils ont besoin. Ces technologies procurent aussi les moyens de relier les clients et les fournisseurs de services grâce à des protocoles de liaison distante comme SOAP utilisé par UPnP et Web Services, RMI utilisé par Jini et CORBA/llOP utilisé par CORBA.

Ces technologies permettent la mise en relation d'un composant "fournisseur de services" et d'un composant "demandeur de services" situés sur des noeuds différents du réseau. Toutefois, le programmeur doit écrire du code non-fonctionnel, c'est-à-dire attaché à une préoccupation externe aux fonctionnalités premières du logiciel, tel que :
- la programmation de la recherche d'un service ayant des propriétés recherchées par le demandeur de service,
- la mise en attente de certains traitements comme l'activation et l'annonce de services fournis tant que les services requis ne sont pas disponibles, et
- la détection et le traitement des événements d'enregistrement, de suppression et de modification des services.

Le Service Binder décrit plus haut traite précisément de ces aspects, mais dans le contexte non distribué OSGi, puisqu'il prend en charge l'assemblage et le désassemblage de composants en fonction de critères décrits dans un fichier de méta-données obéissant à une syntaxe XML : services fournis et propriétés associées, services requis avec leurs critères d'acceptabilité (filtres).

On constate en résumé qu'aucune solution technique connue à ce jour ne permet la gestion automatique des dépendances de services entre fournisseurs et demandeurs dans un environnement distribué.

L'invention propose donc un procédé de gestion automatique des associations entre composants demandeurs de services et composants fournisseurs de services dans un environnement distribué, comprenant les étapes suivantes :
- découverte dynamique, au moyen d'au moins un protocole de découverte de services distribué, de services requis,
- annonce, au moyen d'au moins un protocole de découverte de services distribué, de services fournis, et
- réalisation d'une liaison entre au moins un composant demandeur de services et au moins un composant fournisseur de services.
   Ce procédé est remarquable en ce que, chaque composant étant intégré dans une plateforme locale faisant partie de l'environnement distribué,
- l'un au moins desdits composants est associé à un fichier déclaratif dans lequel sont déclarés lesdits services requis et/ou lesdits services fournis, et
- lors du démarrage dudit au moins un composant, il est prévu une analyse dudit fichier déclaratif au sein de la plateforme dans laquelle est intégré ce composant.

Ainsi, l'invention met en oeuvre la gestion automatique des associations fournisseurs-demandeurs à partir d'une déclaration préalable des dépendances de services de chaque composant, c'est-à-dire des services fournis et/ou requis par chaque composant de l'application. Cette déclaration préalable peut par exemple avantageusement être écrite dans une syntaxe simple, telle que la syntaxe XML. La découverte de service peut par exempte résulter d'une requête présentée par une application "cliente", ou de la réception d'une annonce spontanée émise par un fournisseur de services.

L'invention concerne donc, corrélativement, un fichier déclaratif dans lequel sont déclarés les services requis et/ou les services fournis par un composant associé audit fichier, **caractérisé en ce qu**'il est apte à être analysé par un objet gestionnaire lors du démarrage de ce composant au sein d'une plate-forme faisant partie d'un environnement distribué.

Selon des caractéristiques particulières, le procédé selon l'invention peut comprendre en outre, suite à l'analyse dudit fichier déclaratif au sein de la plateforme et pour au moins un service requis déclaré dans ledit fichier, une étape de maintien dynamique de la connaissance des composants fournisseurs disponibles et, le cas échéant, une étape de liaison dudit composant considéré à un composant fournisseur disponible afin de fournir ledit service requis.

Grâce à ces dispositions, l'obtention d'un service requis par un composant est assurée de manière automatique.

Selon d'autres caractéristiques particulières, le procédé selon l'invention peut comprendre en outre, suite à l'analyse dudit fichier déclaratif au sein de la plateforme et pour au moins un service fourni déclaré dans ledit fichier, une étape d'annonce dudit service fourni au sein de l'environnement distribué.

Grâce à ces dispositions, la mise à disposition d'un service fourni par un composant est assurée de manière automatique.

Selon encore d'autres caractéristiques particulières, le procédé selon l'invention peut comprendre en outre une étape de suppression d'une liaison entre au moins un composant demandeur d'un service et au moins un composant précédemment fournisseur de ce service, lorsque ce composant précédemment fournisseur de ce service n'est plus à même de fournir ce service.

On peut ainsi avantageusement éliminer une ou plusieurs liaisons devenues inutiles.

Par ailleurs, l'invention permet avantageusement au développeur d'élaborer son application indépendamment des technologies de découverte de service et des technologies de communication présentes sur le réseau durant l'exécution. L'invention permet donc l'utilisation transparente de tous les protocoles de découverte et tous les protocoles de communication existants, sans que l'on doive se limiter à un représentant unique de ces protocoles.

En particulier, l'invention est compatible avec tous types de protocoles de découverte de services distribués. Par exemple, au moins un protocole de découverte de services distribué peut être choisi parmi les protocoles SLP, Jini, UDDI, UPnP/SSDP, CORBA et WS-SD.

Selon un mode de réalisation, pour au moins un couple demandeur de services/fournisseur de services, ladite liaison peut être réalisée au moyen d'un protocole de communication distante. Par exemple, ledit protocole de communication distante peut être choisi parmi les protocoles RMI, SOAP et CORBA/IIOP.

Dans ce mode de réalisation, certains composants mettant en oeuvre le protocole de communication distante et/ou certains composants mettant en oeuvre un protocole de découverte de service distribué peuvent avantageusement être installés au moyen d'un téléchargement automatique en fonction d'évènements prédéterminés, tels que la création d'une liaison entre deux composants ou l'installation d'un composant déclarant un service.

Par ailleurs, selon un mode de réalisation, pour au moins un couple demandeur de services/fournisseur de services hébergés par une même plate-forme, ladite liaison peut naturellement être réalisée au moyen d'une communication locale

Comme on l'a expliqué ci-dessus, l'invention est destinée à être mise en oeuvre dans un environnement distribué. C'est pourquoi elle concerne, également, une plate-forme faisant partie d'un tel environnement et comprenant :
- au moins un composant associé à un fichier déclaratif dans lequel sont déclarés les services requis et/ou les services fournis par ce composant, et
- au moins un objet gestionnaire apte à analyser ledit fichier déclaratif lors du démarrage de ce composant au sein de ladite plate-forme.

L'invention vise aussi des programmes d'ordinateur.

Elle concerne ainsi, premièrement, un-programme d'ordinateur, dit de coeur, comprenant des instructions de code de programme pour, d'une part, interpréter des fichiers déclaratifs de services requis par un composant demandeur de services et des fichiers déclaratifs de services fournis par un composant fournisseur de services dans un environnement distribué, et, d'autre part, choisir parmi les protocoles disponibles un protocole de communication compatible avec ledit composant demandeur de services et ledit composant fournisseur de services, lorsque ledit programme de coeur est exécuté par un ordinateur.

Ainsi, le programme de coeur est capable d'identifier quels services peuvent faire l'objet d'une association entre un demandeur et un fournisseur de service. Avantageusement, ce programme n'a pas besoin de connaître en détail quels sont les protocoles de découverte de service ou les types de communication disponibles.

C'est pourquoi l'invention concerne, deuxièmement, un programme d'ordinateur, dit d'implémentation, destiné à être appelé par un programme de coeur tel que décrit succinctement ci-dessus, comprenant des instructions de code de programme pour mettre en oeuvre au moins un protocole de découverte de services distribué et/ou au moins un protocole de communication à distance, lorsque ledit programme d'implémentation est exécuté par un ordinateur.

Le fait de prévoir ainsi, d'une part, un programme de coeur (installé sur toutes les plates-formes), et d'autre part des programmes d'implémentation (pouvant n'être installés que sur certaines de ces plates-formes) présente l'avantage de ne pas imposer à tous les noeuds du système la gestion du programme d'ordinateur complet requis pour la mise en oeuvre de l'invention. Toutefois, il est bien clair que cet agencement de programmes possédant différentes fonctionnalités n'est mentionné ici qu'à titre préférentiel, et n'est nullement indispensable pour pouvoir mettre en oeuvre l'invention.

La description qui va suivre en regard des dessins annexés, de modes de réalisation donnés à titre d'exemples non limitatifs, fera bien comprendre en quoi consiste l'invention et comment elle peut être réalisée.
La figure 1 est un schéma de fonctionnement d'une application sur plusieurs plates-formes distribuées.
La figure 2 est un schéma du coeur de l'infrastructure adaptée à un seul protocole de découverte de services et un seul protocole de communication, conformément à un premier mode de réalisation de l'invention.
La figure 3 est un schéma relatif à la publication d'un service, conformément à un premier mode de réalisation de l'invention.
La figure 4 est un schéma relatif à la découverte d'un service enregistré, conformément à un premier mode de réalisation de l'invention.
La figure 5 est un schéma relatif à un appel distant des méthodes d'un fournisseur de service, conformément à un premier mode de réalisation de l'invention.
La figure 6 est un schéma des mécanismes mis en oeuvre dans un deuxième mode de réalisation de l'invention.
La figure 7 est un schéma de fonctionnement d'une application sur plusieurs plates-formes distribuées et plusieurs équipements.
La figure 8 est un schéma du coeur de l'infrastructure adaptée à de multiples technologies, conformément à un deuxième mode de réalisation de l'invention.
La figure 9 est un schéma relatif à la publication d'un service, conformément à un deuxième mode de réalisation de l'invention.
La figure 10 est un schéma relatif à la découverte d'un service enregistré, conformément à un deuxième mode de réalisation de l'invention.
La figure 11 est un schéma relatif à un appel distant des méthodes d'un fournisseur de services, conformément à un second mode de réalisation de l'invention.

Un premier mode de mise en oeuvre de l'invention comprenant un seul protocole de découverte de service et zon seul protocole de communication distante va maintenant être décrit en détail au dessus d'une plate-forme de services de type OSGi. L'environnement OSGi donne un exemple pratique de réalisation, l'invention pouvant être étendue à tout environnement d'exécution à composants s'appuyant sur un service équivalent à celui du « Service Binder ».

Dans le cas particulier de la plate-forme OSGi, on utilisera la terminologie dite "*bundle*" qui définit une unité de déploiement ou un élément de logiciel déployable sur cette plate-forme. L'invention consiste en un ensemble de "*bundles*" pouvant être déployés en totalité ou en partie sur chacun des noeuds d'un réseau d'équipements électroniques intelligents tels que des ordinateurs.

La réalisation proposée comprend un ensemble de classes et d'interfaces génériques définissant les processus de base, comme l'export, la liaison, la découverte dans un environnement distribué, à savoir :
- notion d"'usine à exporter" : ensemble de classes et d'interfaces utiles pour l'export. Le rôle d'une telle usine est de fabriquer pour un objet quelconque une "référence d'export" contenant toutes les informations permettant d'atteindre cet objet depuis un noeud du réseau, par exemple, une URL ;
- notion d"'usine à liaison" : ensemble de classes et d'interfaces utiles pour la liaison. Le rôle d'une telle usine est de fabriquer à partir d'une "référence d'export" un objet de liaison permettant d'invoquer les méthodes de l'objet distant ;
- notion de "service de découverte" : ensemble de classes et d'interfaces utiles pour mettre en oeuvre ce concept ; le rôle d'un service de découverte est de permettre à des serveurs de publier des références de service sur le réseau, et à des clients de découvrir les services ainsi publiés.

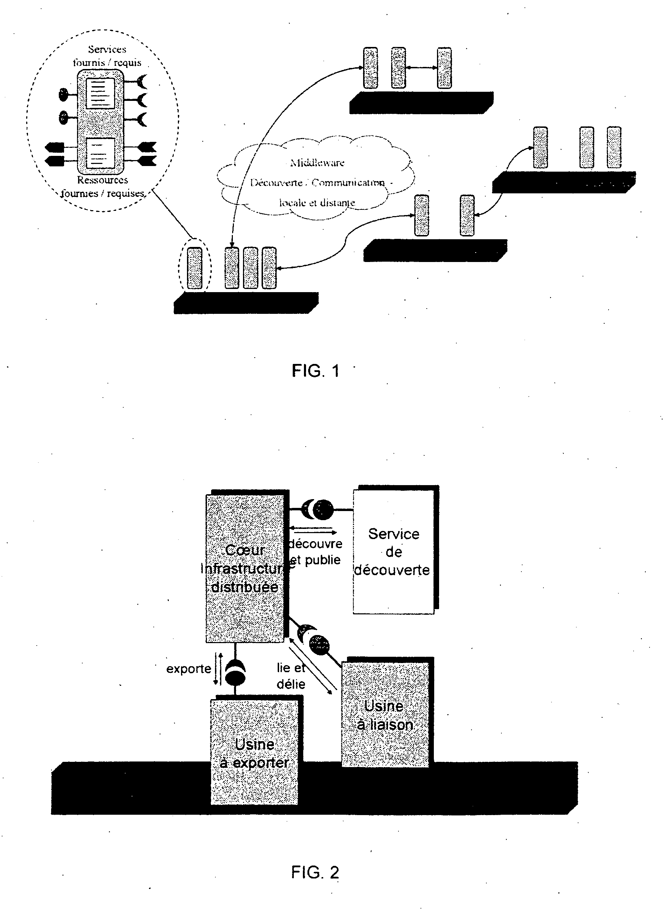

Ces interfaces et classes peuvent être fournies dans un seul bundle, pour un déploiement le plus rapide, ou dans plusieurs bundles séparés, pour une maintenance modulaire. La présence de ce bundle ou de cet ensemble de bundles est nécessaire sur chaque plate-forme utilisant l'invention. Toutes ces interfaces peuvent être incluses dans un seul et même composant comme celui qui est appelé "Coeur Infrastructure distribuée" sur la figure 2.

Les bundles d'implémentation fournissent :
- une implémentation de l'interface "service de découverte" qui met en oeuvre le protocole SLP (Service Location Protocol) ou tout autre protocole choisi comme protocole de découverte de services distribué pour étendre la découverte de services à plusieurs plates-formes ;
- une implémentation de l'interface "usine à liaison" utilisant un protocole de communication à distance, comme RMI ("*Remote Method Invocation*") ; et
- une implémentation de l'interface "usine à exporter" utilisant ledit protocole de communication à distance.

Les mécanismes de Service Binder sont repris et étendus avec des mécanismes distribués. Le cycle de vie des composants est respecté. Chaque composant décrit dans le fichier descriptif se voit aussi attacher un gestionnaire automatique de dépendances. Chaque fois que le gestionnaire des dépendances d'un composant effectue une opération de découverte ou de liaison de service, le mécanisme est étendu de la manière suivante.
- La recherche d'un type de service requis prenant en compte des propriétés définies par le composant est d'abord effectuée localement sur la plate-forme. Si un nombre suffisant de fournisseurs de ce service est trouvé, la recherche est concluante et s'interrompt. Les liaisons aux composants découverts sont alors exclusivement locales. Si le nombre de fournisseurs de service découverts sur la plate-forme n'est pas suffisant et si la description de la dépendance mentionne qu'elle peut éventuellement être satisfaite de façon distante, par exemple au moyen d'une valeur booléenne ajoutée dans la syntaxe de la description, le gestionnaire effectue alors sa requête par le protocole de découverte susmentionné. Si les références découvertes conviennent, le gestionnaire appelle l'usine à liaison pour procurer un représentant de l'objet distant fournisseur du service, objet implémentant l'interface de service, au composant demandeur. On effectue ainsi une liaison « distante ». L'interface de l'objet procuré dans le cas d'une liaison distante est en tout point semblable à celle de l'objet qui serait procuré si le fournisseur était local. La différence est que l'objet procuré traite les demandes en tant que délégué, ou "*proxy* ", et retransmet les requêtes à l'objet distant.
- L'enregistrement d'un service fourni est effectué d'abord sur la plate-forme locale. Si le fichier descriptif du composant mentionne que le service peut être proposé de manière distante, alors le gestionnaire appelle l'usine à exporter pour construire une référence d'export, puis effectue l'enregistrement de cette référence selon le protocole de découverte. La référence d'export du composant contient les informations suffisantes à l'usine à liaison présente sur un client pour construire un "*proxy*" permettant l'accès à ce composant distant.

L'écriture du code du Coeur nécessite uniquement de connaître les "interfaces de base" décrites plus haut. Sur la figure 2, les interfaces de bases et le code du Coeur sont rassemblés dans le bundle "Coeur Infrastructure Distribuée". Pour un fonctionnement en mode distribué, le Coeur a besoin que soient installés sur chaque plate-forme OSGi le bundle d'usine à liaison RMI pour les services requis, le bundle d'usine à exporter RMI pour les services fournis et le bundle permettant l'accès à la découverte SLP (Figure 2). Dans la figure 1, le coeur de l'infrastructure n'est pas représenté sur chaque plate-forme mais chaque bundle installé utilise les mécanismes offerts par le coeur de l'infrastructure.

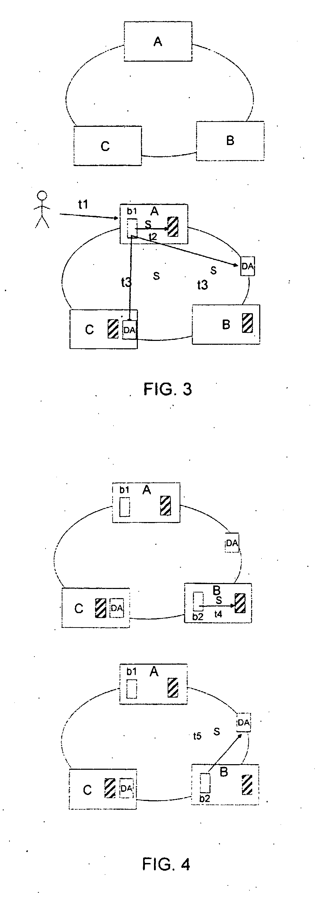

Le mécanisme distribué du procédé conforme au premier mode de réalisation de l'invention est maintenant décrit en référence aux figures 3, 4 et 5.

La figure 3 montre trois plates-formes sur le même réseau local : A, B, C. L'utilisateur demande l'installation d'une application. L'installation comprend l'installation du bundle b1 (t1) sur la plate-forme A. Un des composants de ce bundle enregistre, via le coeur de l'infrastructure, un service S auprès du répertoire de services associé à la plate-forme A (t2), puis l'enregistre auprès de répertoires distants appelés DA (Directory Agent, entité définie par SLP) (t3).

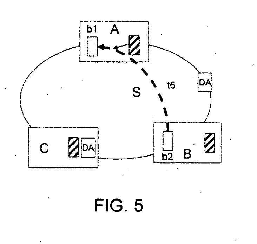

La figure 4 montre la présence du bundle b2 sur la plate-forme B, dont un des composants formule une requête de services. La requête est d'abord locale (t4). Dans cet exemple, soit le service S souhaité n'est pas enregistré sur la plate-forme B, soit la description de b2 indique que b2 requiert la liaison à tous les fournisseurs de ce service. Par conséquent, le bundle b2 s'adresse à un des répertoires distants DA (t5). Comme la référence enregistrée par b1 convient, le composant demandeur analyse alors les paramètres RMI attachés à la référence pour appeler les méthodes sur le service distant (t6) sur la plate-forme A, comme illustré sur la figure 5.

L'invention proposée est destinée à être installée sur des équipements électroniques intelligents à domicile, en entreprise ou dans le cadre de réseaux locaux. Ces équipements sont habituellement livrés avec une architecture à composants classique. Les composants d'architecture et les composants applicatifs peuvent être installés à distance selon les besoins. Pour un bon fonctionnement, les bundles décrivant les interfaces de base et le "coeur de l'infrastructure distribuée" doivent être installés sur chaque plate-forme qui effectuera des liaisons distantes ou aura besoin de services distants.

De manière habituelle, le développeur définit tout d'abord les interfaces des services internes ou externes à son application. Ces interfaces dans tous les modèles orientés service sont définies par :
- un nom d'interface
- des noms de méthodes, appelées aussi actions ou fonctions, avec leurs arguments d'entrée et de retour.

Ensuite, il écrit le code de l'application en utilisant ces interfaces. De manière usuelle, une part du code est attachée aux technologies de découverte et de liaison distante utilisées. Dans le cadre de l'invention, le développeur écrit le code de ses composants selon un modèle de programmation standard (ici OSGi). Seul un fichier descriptif particulier est ajouté à chaque composant afin de déclarer les services à fournir de manière répartie et les services requis. L'invention permet de générer automatiquement les objets "*proxy*", intermédiaires utiles à l'adaptation de la découverte et de la communication selon le modèle visé. Le code est donc générique et est adapté automatiquement à la découverte et à la liaison de services distants.

Le fichier descriptif est aussi utile à l'exécution. Conformément à l'invention, un objet "gestionnaire" analyse ce fichier au démarrage du composant. Pour chaque service requis, il active un objet qui maintient dynamiquement la connaissance des fournisseurs disponibles par utilisation des technologies de découverte disponibles, relie le composant demandeur aux fournisseurs, ou les délie. Dès que tous les services requis sont fournis, le gestionnaire annonce alors les services fournis par la technologie de découverte, utilisée pour l'annonce ou l'enregistrement de services dans ce cas. Les applications se composent de manière spontanée sans configuration explicite avant l'exécution. Durant l'exécution, la modification de l'environnement (commandes de l'utilisateur, arrivée et départ d'équipements, et ainsi de suite) a pour conséquence l'apparition ou la suppression de services. Chaque composant réagissant dynamiquement à ces événements, l'application se reconfigure automatiquement.

En particulier, on pourra avantageusement prévoir la suppression d'une ou plusieurs liaisons entre des composants demandeurs d'un service et un composant précédemment fournisseur de ce service qui a fait savoir qu'il ne sera plus à même de fournir ce service à partir d'un moment donné.

De manière générale, l'administrateur installe ses équipements munis de leur plate-forme de services. Il peut installer directement ou à distance le "coeur de l'infrastructure distribuée" et les unités implémentant l'usine à exporter, l'usine à liaison et l'accès au service de découverte distant.

L'utilisateur peut installer des composants applicatifs sur les plates-formes où l'invention est installée, par exemple grâce à un catalogue disponible sur Internet, le déploiement n'étant pas une problématique adressée par l'invention. Sans configuration préalable, les équipements publient les services fournis, découvrent les services disponibles et interagissent afin d'offrir toutes les fonctionnalités de l'application voulue.

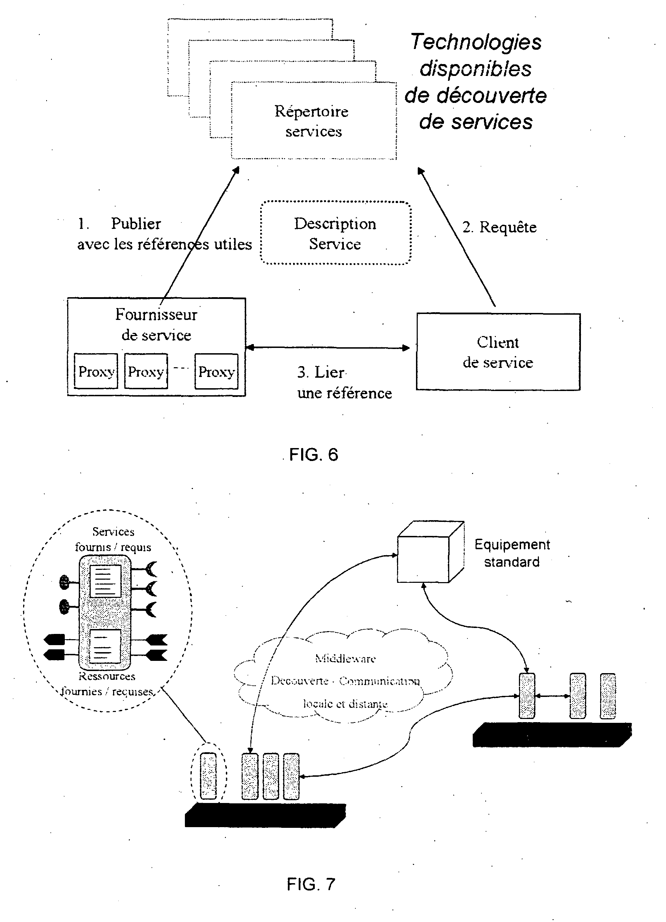

Un deuxième mode de mise en oeuvre de l'invention combinant toutes les technologies possibles pour la découverte de service et la communication distante va maintenant être décrit en détail au dessus d'une plate-forme de services de type OSGi. Ce deuxième mode de réalisation étend le premier mode de réalisation à une architecture orientée service utilisant tous les protocoles de découverte de services et de communication distante disponibles (figure 6).

La réalisation proposée comprend un ensemble de classes et d'interfaces génériques définissant les processus de base, à savoir :
- notion de "méta-usine à exporter" : le rôle d'une telle usine est de maintenir à jour la liste des "usines à exporter" disponibles sur la plate-forme ; la méta-usine peut appeler toutes les usines à exporter disponibles afin de créer et d'attacher les paramètres utiles aux différentes technologies de communication distantes pour chaque enregistrement d'un service fourni ;
- notion de "méta-usine à liaison" : le rôle d'une telle usine est de maintenir à jour la liste des usines à liaisons disponibles sur la plate-forme ; la méta-usine peut créer la liaison distante adéquate à partir de la connaissance d'une référence d'objet distant ; et
- notion de "méta-service de découverte" : le rôle de cette entité est de maintenir à jour la liste des services de découverte disponibles ; elle permet à des fournisseurs de services de publier des références de service sur le réseau selon toutes les technologies de découverte de service présentes, et à des clients de découvrir les services ainsi publiés.

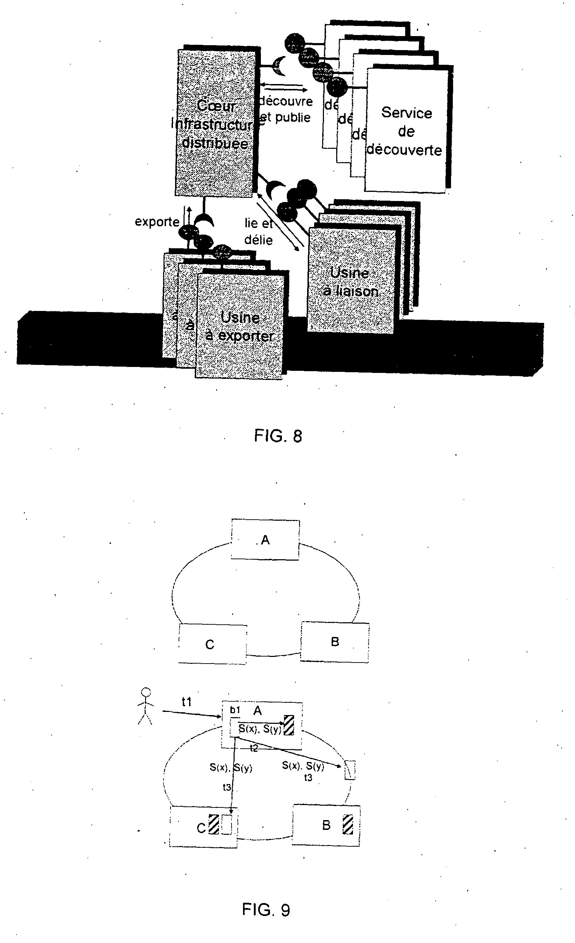

Ces interfaces et classes peuvent être fournies dans un seul « bundle » ou dans plusieurs bundles séparés. La présence de ce bundle (ou de cet ensemble de bundles) est nécessaire sur chaque plate-forme utilisant l'invention. Toutes ces interfaces peuvent être incluses dans un seul et même composant comme celui qui est appelé "Coeur Infrastructure distribuée" sur la figure 8.

Les bundles d'implémentation mettant en oeuvre les notions définies plus haut dans les bundles de base sont par exemple :
- usines à exporter spécialisées (RMI, SOAP pour les services UPnP, SOAP pour les Web Services, CORBA/IIOP) implémentant les interfaces de bases;
- usines à liaison spécialisées (mêmes technologies que ci-dessus) implémentant les interfaces de base ; et
- bundles contenant des composants implémentant la notion de service de découverte en utilisant un protocole de découverte classique (SLP, Jini, WS-SD, UDDI, UPnP/SSDP, Corba Trading Service) ou ad hoc, basé par exemple sur une technologie "*Peer to Peer*".

Pour qu'un demandeur fonctionnant sur une plate-forme A puisse utiliser un fournisseur fonctionnant sur une autre plate-forme B, il suffit que soit déployée sur A au moins une "usine à liaison" compatible avec une "usine à exporter" déployée sur B. De même, pour que le demandeur puisse découvrir le fournisseur, il suffit que soit déployé sur les deux plates-formes un bundle encapsulant le même protocole de découverte. Si le client (resp. serveur) est un équipement utilisant des technologies standard, le serveur (resp. client) doit aussi utiliser les mêmes technologies de découverte, d'export et de liaison.

Ce deuxième mode de réalisation de l'invention propose des interfaces et des mécanismes génériques pour adapter le procédé selon le premier mode de réalisation précédemment décrit à toutes les technologies de découverte de services et toutes les technologies de communication distante.

Les mécanismes du procédé selon le premier mode de réalisation sont repris et étendus pour l'adapter à des technologies variées. Chaque composant développé est décrit dans le fichier descriptif et se voit attacher un gestionnaire automatique de dépendances. Chaque fois que le gestionnaire des dépendances d'un composant effectue une opération de découverte ou de liaison de service, le mécanisme est étendu à tous les protocoles pertinents présents. Le bundle "Coeur" est lui-même constitué de trois composants :
- un composant implémentant le "méta-service de découverte" requérant localement tous les composants installés fournissant un service de découverte,
- un composant implémentant la "méta-usine à liaison" requérant localement tous les composants installés fournissant une usine à liaison, et
- un composant implémentant la "méta-usine à exporter" requérant localement tous les composants installés fournissant une usine à exporter.

Le code du bundle "Coeur" utilise ces trois composants afin de mettre en oeuvre les mécanismes répartis suivants.

Comme dans le procédé selon le premier mode de réalisation, la recherche d'un type de service requis prenant en compte des propriétés définies par le composant est d'abord effectuée localement sur la plate-forme. Si la description de la dépendance mentionne qu'elle peut éventuellement être satisfaite de façon distante, par exemple par une valeur booléenne ajoutée dans la syntaxe de la description, le gestionnaire effectue alors sa requête successivement auprès de chaque service de découverte disponible. Après chaque requête, si les fournisseurs de services découverts conviennent et peuvent être liées au composant demandeur, la recherche est déclarée concluante et s'interrompt.

Un fournisseur de services découvert peut être lié au composant demandeur sous la condition suivante : le fournisseur découvert doit être enregistré avec au moins une référence d'export compatible avec une usine à liaison disponible sur la passerelle, connue par le Coeur. L'usine à liaison compatible procure alors un représentant de l'objet distant fournisseur du service, à savoir un objet implémentant l'interface de service, au composant demandeur à partir des paramètres utiles inscrits dans la référence d'export. L'interface de l'objet procuré est en tout point semblable à celle de l'objet qui serait procuré si le fournisseur était local. La différence est que l'objet traite les demandes en tant que délégué ("*proxy*") et retransmet les requêtes à l'objet distant.

Comme dans le procédé selon le premier mode de réalisation, l'enregistrement d'un service fourni est effectué d'abord sur la plate-forme locale. Si le fichier descriptif du composant mentionne que le service peut être proposé de manière distante, alors l'enregistrement s'effectue successivement auprès de chaque service de découverte disponible sur la plate-forme, connu par le Coeur. Le composant est alors enregistré avec des références d'export construites par chaque usine à exporter disponible sur la plate-forme, connue par le Coeur.

L'écriture du code du Coeur nécessite uniquement de connaître les "interfaces de base" décrites plus haut. Sur la figure 8, les interfaces de base et le code du Coeur sont rassemblés dans le bundle "Coeur Infrastructure Distribuée". Pour un fonctionnement en mode distribué, le Coeur a besoin que soient installés sur chaque plate-forme OSGi un ou plusieurs bundles d'usine à liaison pour les services requis, un ou plusieurs bundles d'usine à exporter pour les services fournis et un ou plusieurs bundles proposant un service de découverte (figure 7). Sur la figure 7, le coeur de l'infrastructure n'est pas représenté sur chaque plate-forme mais chaque bundle installé utilise les mécanismes offerts par le coeur de l'infrastructure.

Le mécanisme de répartition du procédé conforme au deuxième mode de réalisation de l'invention est maintenant décrit en référencé aux figures 9, 10 et 11.

La figure 9 montre trois plates-formes sur le même réseau local : A, B, C. L'utilisateur demande l'installation d'une application. L'installation comprend l'installation du bundle b1 (t1) sur la plate-forme A. Un des composants de ce bundle enregistre, via le coeur de l'infrastructure; un service S auprès du répertoire de services associé à la plate-forme A (t2) puis l'enregistre auprès de répertoires distants selon les services de découverte disponibles (t3).
L'enregistrement associe la mention de références d'export selon différents protocoles de communication (ici x et *y*).

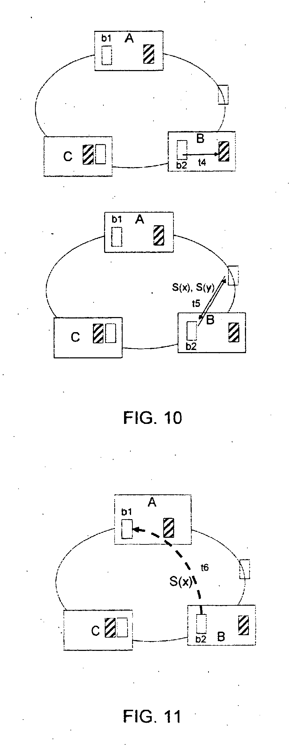

La figure 10 montre la présence du bundle b2 sur la plate-forme B, dont un des composants formule une requête de services. La requête est .d'abord locale (t4). Examinons le cas où le service souhaité n'est pas enregistré sur la plate-forme B et/ou la description de b2 indique que b2 requiert la liaison à tous les fournisseurs de ce service même distants. Par conséquent, le Coeur adresse successivement la requête à chaque service de découverte ; une requête est par exemple émise à un répertoire externe sur la figure 10 (t5). Puisque la référence enregistrée par b1 convient, le composant demandeur analyse les références distantes. Le bundle b2 retient la référence associée au protocole de communication adéquat x pour appeler les méthodes sur le service distant (t6) (figure 11).

Le deuxième mode de réalisation de l'invention est destiné à être installé sur des équipements électroniques intelligents à domicile, en entreprise ou dans des réseaux locaux. Ces équipements sont habituellement livrés avec une architecture classique. Les composants d'architecture et les composants applicatifs peuvent être installés à distance selon les besoins. Pour un bon fonctionnement, les bundles décrivant les interfaces de base et le "coeur de l'infrastructure distribuée" doivent être installés sur chaque plate-forme destinée à effectuer des liaisons distantes ou ayant besoin de services distants. Chaque plate-forme peut ensuite accueillir tout ou partie des bundles d'implémentation disponibles, en fonction des besoins et des capacités de la plate-forme : typiquement, on installera sur un PC tous les bundles d'implémentation disponibles, alors qu'on pourra installer seulement un sous-ensemble sur un système embarqué de capacité limitée en mémoire.

De manière habituelle, le développeur définit tout d'abord les interfaces des services internes ou externes à son application. Ces interfaces dans tous les modèles orientés service sont définies par :
- un nom d'interface ; et
- des noms de méthodes, appelées aussi actions ou fonctions, avec leurs arguments d'entrée et de retour.

De manière usuelle, une part du code dépend des technologies de découverte et de liaison utilisées. Dans le cadre de l'invention, le développeur écrit le code de ses composants selon un modèles de programmation classique. Seul un fichier descriptif particulier est ajouté à chaque composant afin de déclarer les services à fournir de manière répartie et les services requis. L'invention lui permet de générer automatiquement les objets *"proxy",* intermédiaires utiles à l'adaptation de la découverte et de la communication selon les modèles multiples visés (figure 6). Le code est donc générique et est adapté automatiquement à toute technologie de découverte et de liaison distante, sous réserve que les adaptateurs correspondants aient été développés.

Le fichier descriptif est utilisé à l'exécution. Un objet "gestionnaire" analyse ce fichier au démarrage du composant. Pour chaque service requis, il active un objet qui maintient dynamiquement la connaissance des fournisseurs disponibles par utilisation des technologies de découverte disponibles, relie le composant aux fournisseurs, ou les délie. Dès que tous les services requis sont fournis, le gestionnaire annonce alors les services fournis par toutes les technologies de découverte disponibles, utilisées pour l'annonce ou l'enregistrement de services dans ce cas. Les applications se composent de manière spontanée sans configuration explicite avant l'exécution. Durant l'exécution, la modification de l'environnement (commandes de l'utilisateur, arrivée et départ d'équipements, et ainsi de suite) a pour conséquence l'apparition ou la suppression de services. Chaque composant réagissant dynamiquement à ces événements, l'application se reconfigure automatiquement.

En particulier, on pourra avantageusement prévoir la suppression d'une ou plusieurs liaisons entre des composants demandeurs d'un service et un composant précédemment fournisseur de ce service qui a fait savoir qu'il ne sera plus à même de fournir ce service à partir d'un moment donné.

Deux sortes d'application peuvent notamment être construites :
- les applications fonctionnant selon le premier mode de réalisation pour un seul protocole de découverte de services et un seul protocole de communication ; et
- les applications selon le deuxième mode de réalisation mettant en oeuvre plusieurs équipements hétérogènes empruntant différentes technologies de découverte de services ou de liaison distante ; certaines de ces applications peuvent avoir été mises au point de manière classique ; après téléchargement et démarrage des composants sur la passerelle, ces composants se découvrent, découvrent les équipements pré-existants (c'est à dire fonctionnant au moyen d'un code mis au point indépendamment de l'invention et utilisant des mécanismes classiques de découverte et de communication distante), et s'interconnectent quelles que soient les technologies présentes afin de rendre possibles les différentes fonctionnalités de l'application.

Si d'autres composants du modèle proposé ou d'autres équipements viennent à publier leurs services sur le réseau, des liaisons se modifient ou s'ajoutent dynamiquement. Si des composants du modèle proposé ou des équipements quittent le réseau, les liaisons correspondantes se rompent ou se modifient.

L'utilisateur peut posséder préalablement des équipements annonçant leurs services selon des technologies standard diverses (Jini, UPnP, Web Services, et ainsi de suite). L'utilisateur n'a pas besoin de connaître les détails de ces technologies. Il possède aussi au moins un équipement électronique tel un ordinateur où l'invention est installée. L'utilisateur peut installer des composants applicatifs sur les plates-formes où l'invention est installée, par exemple grâce à un catalogue disponible sur Internet, le déploiement n'étant pas une problématique adressée par l'invention. Sans configuration préalable, les équipements publient les services fournis selon les technologies par eux connus, et, grâce à l'invention, les composants découvrent les services fournis, publient leurs propres services en utilisant les technologies disponibles et interagissent afin d'offrir toutes les fonctionnalités de l'application voulue.

De nombreuses utilisations de l'invention peuvent être envisagées :
- applications bureautiques (imprimante, scanneur, télécopieur, et ainsi de suite) : au bureau comme à la maison, de nombreux équipements ont vocation à être partagés et à être composés pour des applications diverses ; certains de ces équipements s'annoncent spontanément sur le réseau selon des technologies classiques (Jini, UPnP, Web Services, CORBA, et ainsi de suite);
   l'installation de l'invention sur un ordinateur permet la découverte et l'utilisation de ces équipements ; l'ordinateur pourra proposer spontanément, c'est-à-dire sans configuration préalable, l'impression de documents sur une imprimante UPnP ou Jini, et ainsi de suite ; en outre, il pourra composer les services offerts même si les équipements fournis ne sont pas compatibles a priori ; par exemple, le service offert par un scanneur CORBA pourra être composé avec le service d'impression offert par l'imprimante Jini pour offrir un service de photocopieuse ;
- applications domotiques (chauffage, ventilation, air conditionné, luminaires rideaux, stores, et ainsi de suite) : l'invention permet de composer les services domotiques offerts selon diverses technologies ; si les équipements domotiques sont programmés pour être découverts selon des protocoles connus, l'invention permet de les découvrir et de proposer des services composites ; un exemple d'application est la programmation de la mise en marche d'équipements selon un emploi du temps ; par exemple, une heure avant que le réveil ne sonne le matin, les radiateurs Web Services sont remis en marche, et dès que le réveil sonne, la machine à café UPnP se met en marche et le grille-pain Jini peut commencer à griller deux tranches de pain ;
- applications audio-visuelles (télécommande, partage de contenu, restitution) :
   d'autres applications peuvent être composées dans le domaine audio-visuel ; les équipements correspondants peuvent être des serveurs de contenu *("Media Server"),* des équipements de restitution ("*Media Renderer*") ou des équipements comme la "Set-Top-Box" qui relie la télévision au réseau Internet ; les serveurs de contenu multimédia et les services de restitution sont répartis dans la maison et peuvent être découverts et connectés ; un ordinateur ou un assistant personnel équipé de l'invention peut proposer une application qui découvre tous les équipements ; l'application permet d'explorer les contenus multimédia, de transférer un contenu d'un espace de stockage à un autre, et de visionner un élément sur un équipement de restitution comme la télévision du salon ou l'ordinateur de la chambre ;
- services extérieurs : aujourd'hui, de nombreux services sont offerts sous forme de Web Services sur Internet ; il est donc possible grâce à l'invention de développer des applications qui utilisent les services découverts et de les composer avec des services du réseau local ; par exemple, un dysfonctionnement de la machine à laver UPnP peut être identifié et notifié à un service de surveillance des équipements qui avertit l'utilisateur par un message sur son assistant personnel, lequel peut contacter des Web Services (pages jaunes ou service après-vente du constructeur) offerts sur Internet afin de lui proposer une liste de solutions possibles pour pallier le dysfonctionnement ; la solution peut être d'appeler le réparateur le plus proche ou de notifier directement le service après-vente qui proposera alors les moyens à mettre en oeuvre.

## Revendications

1. Procédé de gestion des associations entre composants demandeurs de services et composants fournisseurs de services dans un environnement distribué, lesdits composants étant dans une étape d'écriture écrits dans un langage de programmation objet, ledit procédé comprenant les étapes suivantes :
- découverte dynamique, au moyen d'au moins un protocole de découverte de services distribué, de services requis,
- annonce, au moyen d'au moins un protocole de découverte de services distribué, de services fournis, et
- réalisation d'une liaison entre au moins un composant demandeur de services et au moins un composant fournisseur de services,
**caractérisé en ce que** ledit procédé comprend les étapes suivantes:
- au cours de ladite étape d'écriture:
• association d'au moins un composant demandeur de services à un fichier déclaratif dans lequel sont déclarés lesdits services requis,
• association d'au moins un composant fournisseur de services à un fichier déclaratif dans lequel sont déclarés lesdits services fournis
- Lesdits composants demandeur et fournisseur de services étant intégrés une plateforme locale (A, B, C) faisant partie de l'environnement distribué,
- démarrage dudit composant demandeur de services, analyse du fichier déclaratif qui lui est associé, identification des services requis, puis réalisation de ladite étape de découverte dynamique,
- démarrage dudit composant fournisseur de services, analyse du fichier déclaratif qui lui est associé, identification des services fournis, puis réalisation de ladite étape d'annonce,
choix parmi des types de communication disponibles, d'un type de communication qui est compatible avec le composant demandeur de services et le composant fournisseur de services,
- ladite liaison entre le composant demandeur de services et le composant fournisseur de services étant réalisée à l'aide du type de communication compatible identifié.

2. Procédé selon la revendication 1, **caractérisé en ce qu'**il comprend en outre une étape de suppression d'une liaison entre au moins un composant demandeur d'un service et au moins un composant précédemment fournisseur de ce service, lorsque ce composant précédemment fournisseur de ce service n'est plus à même de fournir ce service.

3. Procédé selon l'une quelconque des revendications 1 à 2, **caractérisé en ce que,** pour au moins un couple demandeur de services/fournisseur de services, le type de communication utilisé est un protocole de communication distante.

4. Procédé selon la revendication 3, **caractérisé en ce que** ledit protocole de communication distante est choisi parmi les protocoles RMI, SOAP et CORBA/IIOP.

5. Procédé selon la revendication 3 ou la revendication 4, **caractérisé en ce qu'**au moins un composant mettant en oeuvre un protocole de communication distante est installé au moyen d'un téléchargement automatique en fonction d'évènements prédéterminés.

6. Procédé selon l'une des revendications 3 à 5, **caractérisé en ce qu'**au moins un composant mettant en oeuvre un protocole de découverte de service distribué est installé au moyen d'un téléchargement automatique en fonction d'évènements prédéterminés.

7. Procédé selon l'une quelconque des revendications 1 à 2, **caractérisé en ce que,** pour au moins un couple demandeur de services/fournisseur de services hébergés par une même plate-forme (A, B, C), le type de communication est local.

8. Procédé selon l'une quelconque des revendications 1 à 7, **caractérisé en ce que** ladite déclaration de services est effectuée en syntaxe XML.

9. Procédé selon l'une quelconque des revendications 1 à 8, **caractérisé en ce que** ledit au moins un protocole de découverte de services distribué est choisi parmi les protocoles SLP, Jini, UDDI, UPnP/SSDP, CORBA et WS-SD.

10. Programme d'ordinateur, dit de coeur pour la mise en oeuvre d'un procédé comprenant toutes les étapes d'un procédé selon l'une quelconque des revendications 1 à 9.,

11. Programme d'ordinateur, dit d'implémentation, destiné à être appelé par un programme de coeur selon la revendication 10, comprenant des instructions de code de programme pour :
- implémenter une interface apte à mettre en oeuvre ledit protocole de découverte de services distribué,
- implémenter une interface apte à mettre en oeuvre ladite liaison entre lesdits composants demandeur et fournisseur de services,
lorsque ledit programme d'implémentation est exécuté par un ordinateur.

12. Dispositif de gestion des associations entre composants demandeurs de services et composants fournisseurs de services dans un environnement distribué, lesdits composants étant écrits dans un langage de programmation objet, comprenant:
- des moyens de découverte dynamique, au moyen d'au moins un protocole de découverte de services distribué, de services requis,
- des moyens d'annonce, au moyen d'au moins un protocole de découverte de services distribué, de services fournis, et
- des moyens de réalisation d'une liaison entre au moins un composant demandeur de services et au moins un composant fournisseur de services,
**caractérisé en ce que** le dispositif de gestion, de même que les composants demandeurs et fournisseurs de services, sont intégrés dans une plateforme locale (A, B, C) faisant partie de l'environnement distribué, au moins un composant demandeur de services ayant été associé préalablement à un fichier déclaratif dans lequel sont déclarés lesdits services requis, et au moins un composant fournisseur de services ayant été associé préalablement à un fichier déclaratif dans lequel sont déclarés lesdits services fournis, le dispositif gestionnaire consistant en un objet apte à :
- d'une part, démarrer ledit composant demandeur de services, analyser le fichier déclaratif qui lui est associé, identifier les services requis, réaliser une découverte dynamique,
- d'autre part, démarrer ledit composant fournisseur de services, analyser le fichier déclaratif qui lui est associé, identifier les services fournis, réaliser une annonce,
- choisir parmi des types de communication disponibles, un type de communication qui est compatible avec le composant demandeur de services et le composant fournisseur de services,
- établir la liaison entre le composant demandeur de services et le composant fournisseur de services à l'aide du type de communication compatible identifié.

## Claims

1. Method for managing associations between service-requester components and service-provider components in a distributed environment, said components being, in a writing step, written in an object-oriented programming language, said method comprising the following steps:
- dynamic discovery of the required services by means of at least one distributed services discovery protocol,
- announcement of the provided services by means of at least one distributed services discovery protocol, and
- establishment of a link between at least one service-requester component and at least one service-provider component,
**characterized in that** said method comprises the following steps:
- during the writing step:
• association of at least one service-requester component with a declaration file in which the said requested services are declared,
• association of at least one service-provider component with a declaration file in which said provided services are declared,
- said service-requester and service-provider components being incorporated into a local platform (A, B, C) forming part of the distributed environment,
- starting of said service-requester component, analysis of the declaration file associated therewith, identification of the required services, then implementation of said dynamic discovery step,
- starting of said service-provider component, analysis of the declaration file associated therewith, identification of the provided services, then implementation of said announcement step,
- choosing, from available communication types, of a communication type that is compatible with the service-requester component and the service-provider component,
- said link between the service-requester component and the service-provider component being established with the aid of the identified compatible communication type.

2. Method according to Claim 1, **characterized in that** it also comprises a step of deleting a link between at least one service-requester component and at least one component previously providing this service, when this component previously providing this service is no longer capable of providing this service.

3. Method according to either one of Claims 1 and 2, **characterized in that,** for at least one service requester/service provider pair, the communication type used is a remote communication protocol.

4. Method according to Claim 3, **characterized in that** said remote communication protocol is chosen from the RMI, SOAP and CORBA/IIOP protocols.

5. Method according to Claim 3 or Claim 4, **characterized in that** at least one component using a remote communication protocol is installed by means of an automatic download as a function of predetermined events.

6. Method according to one of Claims 3 to 5, **characterized in that** at least one component using a distributed service discovery protocol is installed by means of an automatic download as a function of predetermined events.

7. Method according to either one of Claims 1 and 2, **characterized in that,** for at least one service-requester/service-provider pair accommodated by one and the same platform (A, B, C), the communication type is local.

8. Method according to any one of Claims 1 to 7, **characterized in that** said declaration of services is carried out in XML syntax.

9. Method according to any one of Claims 1 to 8, **characterized in that** said at least one distributed services discovery protocol is chosen from the SLP, Jini, UDDI, UPnP/SSDP, CORBA and WS-SD protocols.

10. Computer program, called a program core for the implementation of a method comprising all the steps of a method, according to any one of Claims 1 to 9.

11. Computer program, called implementation program, designed to be called by a core program according to Claim 10, comprising program code instructions for:
- implementing an interface capable of applying said distributed services discovery protocol,
- implementing an interface capable of applying said link between said service-requester and service-provider components,
when said implementation program is executed by a computer.

12. Device for managing the associations between service-requester components and service-provider components in a distributed environment, said components being written in an object-oriented programming language, comprising:
- means for discovering dynamically required services by means of at least one distributed services discovery protocol,
- means for announcing provided services by means of at least one distributed services discovery protocol, and
- means for establishing a link between at least one service-requester component and at least one service-provider component,
**characterized in that** the management device, like the service requester and provider components, are incorporated into a local platform (A, B, C) forming part of the distributed environment, at least one service-requester component having been previously associated with a declaration file in which said required services are declared, and at least one service-provider component having been previously associated with a declaration file in which said provided services are declared, the management device consisting in an object capable of:
- on the one hand, starting said service-requester component, analysing the declaration file associated therewith, identifying the required services, implementing a dynamic discovery,
- on the other hand, starting said service-provider component, analysing the declaration file associated therewith, identifying the provided services, generating an announcement,
- choosing, from the available communication types, a communication type that is compatible with the service-requester component and the service-provider component,
- establishing the link between the service-requester component and the service-provider component with the aid of the identified compatible communication type.

## Patentansprüche

1. Verfahren zur Verwaltung der Assoziationen zwischen dienstanfordernden Komponenten und dienstanbietenden Komponenten in einer verteilten Umgebung, wobei die Komponenten in einem Schreibschritt in einer objektorientierten Programmiersprache geschrieben werden, wobei das Verfahren die folgenden Schritte enthält:
- dynamische Entdeckung, mittels mindestens eines verteilten Dienstentdeckungsprotokolls, von angeforderten Diensten,
- Meldung, mittels mindestens eines verteilten Dienstentdeckungsprotokolls, von gelieferten Diensten, und
- Herstellung einer Verbindung zwischen mindestens einer dienstanfordernden Komponente und mindestens einer dienstanbietenden Komponente,
**dadurch gekennzeichnet, dass** das Verfahren die folgenden Schritte enthält:
- während des Schreibschritts:
• Assoziation mindestens einer dienstanfordernden Komponente mit einer deklaratorischen Datei, in der die angeforderten Dienste deklariert sind,
• Assoziation mindestens einer dienstanbietenden Komponente mit einer deklaratorischen Datei, in der die gelieferten Dienste deklariert sind,
- wobei die dienstanfordernden und dienstanbietenden Komponenten in eine lokale Plattform (A, B, C) integriert sind, die Teil der verteilten Umgebung ist,
- Start der dienstanfordernden Komponente, Analyse der mit ihr assoziierten deklaratorischen Datei, Identifikation der angeforderten Dienste, dann Durchführung des Schritts der dynamischen Entdeckung,
- Start der dienstanbietenden Komponente, Analyse der mit ihr assoziierten deklaratorischen Datei, Identifikation der gelieferten Dienste, dann Durchführung des Meldungsschritts,
- Wahl, unter verfügbaren Kommunikationsarten, einer Kommunikationsart, die mit der dienstanfordernden Komponente und mit der dienstanbietenden Komponente kompatibel ist,
- wobei die Verbindung zwischen der dienstanfordernden Komponente und der dienstanbietenden Komponente mit Hilfe der identifizierten kompatiblen Kommunikationsart hergestellt wird.

2. Verfahren nach Anspruch 1, **dadurch gekennzeichnet, dass** es außerdem einen Schritt der Aufhebung einer Verbindung zwischen mindestens einer einen Dienst anfordernden Komponente und mindestens einer diesen Dienst vorher anbietenden Komponente enthält, wenn diese vorher diesen Dienst anbietende Komponente nicht mehr in der Lage ist, diesen Dienst anzubieten.

3. Verfahren nach einem der Ansprüche 1 bis 2, **dadurch gekennzeichnet, dass** für mindestens ein Dienstanforderer/Dienstanbieter-Paar die verwendete Kommunikationsart ein Fernkommunikationsprotokoll ist.

4. Verfahren nach Anspruch 3, **dadurch gekennzeichnet, dass** das Fernkommunikationsprotokoll unter den Protokollen RMI, SOAP und CORBA/IIOP ausgewählt wird.

5. Verfahren nach Anspruch 3 oder Anspruch 4, **dadurch gekennzeichnet, dass** mindestens eine Komponente, die ein Fernkommunikationsprotokoll einsetzt, mittels eines automatischen Herunterladens in Abhängigkeit von vorbestimmten Ereignissen installiert wird.

6. Verfahren nach einem der Ansprüche 3 bis 5, **dadurch gekennzeichnet, dass** mindestens eine Komponente, die ein verteiltes Dienstentdeckungsprotokoll einsetzt, mittels eines automatischen Herunterladens in Abhängigkeit von vorbestimmten Ereignissen installiert wird.

7. Verfahren nach einem der Ansprüche 1 bis 2, **dadurch gekennzeichnet, dass** für mindestens ein Dienstanforderer-/Dienstanbieter-Paar, die in der gleichen Plattform (A, B, C) untergebracht sind, die Kommunikationsart lokal ist.

8. Verfahren nach einem der Ansprüche 1 bis 7, **dadurch gekennzeichnet, dass** die Dienste-Deklaration in XML-Syntax durchgeführt wird.

9. Verfahren nach einem der Ansprüche 1 bis 8, **dadurch gekennzeichnet, dass** das mindestens eine verteilte Dienstentdeckungsprotokoll unter den Protokollen SLP, Jini, UDDI, UPnP/SSDP, CORBA und WS-SD ausgewählt wird.

10. Computerprogramm, Kernprogramm genannt, für die Durchführung eines Verfahrens, das alle Schritte eines Verfahrens nach einem der Ansprüche 1 bis 9 enthält.

11. Computerprogramm, Implementierungsprogramm genannt, das dazu bestimmt ist, von einem Kernprogramm nach Anspruch 10 aufgerufen zu werden, das Programmcodeanweisungen enthält, um:
- eine Schnittstelle zu implementieren, die das verteilte Dienstentdeckungsprotokoll einsetzen kann,
- eine Schnittstelle zu implementieren, die die Verbindung zwischen den dienstanfordernden und dienstanbietenden Komponenten einsetzen kann,
wenn das Implementierungsprogramm von einem Computer ausgeführt wird.

12. Vorrichtung zur Verwaltung der Assoziationen zwischen dienstanfordernden Komponenten und dienstanbietenden Komponenten in einer verteilten Umgebung, wobei die Komponenten in einer objektorientierten Programmiersprache geschrieben werden, die enthält:
- Einrichtungen zur dynamischen Entdeckung, mittels mindestens eines verteilten Dienstentdeckungsprotokolls, von angeforderten Diensten,
- Einrichtungen zur Meldung, mittels mindestens eines verteilten Dienstentdeckungsprotokolls, von gelieferten Diensten, und
- Einrichtungen zur Herstellung einer Verbindung zwischen mindestens einer dienstanfordernden Komponente und mindestens einer dienstanbietenden Komponente, **dadurch gekennzeichnet, dass** die Verwaltungsvorrichtung wie auch die dienstanfordernden und dienstanbietenden Komponenten in eine lokale Plattform integriert sind (A, B, C), die Teil der verteilten Umgebung ist, wobei mindestens eine dienstanfordernde Komponente vorher mit einer deklaratorischen Datei assoziiert wurde, in der die angeforderten Dienste deklariert sind, und mindestens eine dienstanbietende Komponente vorher mit einer deklaratorischen Datei assoziiert wurde, in der die gelieferten Dienste deklariert sind, wobei die Verwaltungsvorrichtung aus einem Objekt besteht, das fähig ist:
- einerseits die dienstanfordernde Komponente zu starten, die mit ihr assoziierte deklaratorische Datei zu analysieren, die geforderten Dienste zu identifizieren, eine dynamische Entdeckung durchzuführen,
- andererseits, die dienstanbietende Komponente zu starten, die mit ihr assoziierte deklaratorische Datei zu analysieren, die gelieferten Dienste zu identifizieren, eine Meldung herzustellen,
- unter verfügbaren Kommunikationsarten eine Kommunikationsart auszuwählen, die mit der dienstanfordernden Komponente und der dienstanbietende Komponente kompatibel ist,
- die Verbindung zwischen der dienstanfordernden Komponente und der dienstanbietenden Komponente mit Hilfe der identifizierten kompatiblen Kommunikationsart aufzubauen.
